# EUROPEAN PATENT SPECIFICATION

(11) **EP 3 516 286 B1**
(45) Date of publication and mention of the grant of the patent: **22.04.2020**
(21) Application number: 17787039.1
(22) Date of filing: 20.09.2017
(51) Int. Cl.: F16M 11/04, F16M 11/18, F16M 11/42

(54) **DISPLAY SCREEN DEVICE**
ANZEIGEBILDSCHIRMVORRICHTUNG
DISPOSITIF D'ÉCRAN D'AFFICHAGE

(30) Priority: 20.09.2016 NL 2017500
(43) Date of publication of application: 31.07.2019
(73) Proprietor: Prowise B.V., 6021 PX Budel (NL)
(72) Inventor: AHRENS , Willi Hermann Heinrich, 6021 PX Budel (NL)
(74) Representative: Algemeen Octrooi- en Merkenbureau B.V.
(86) International application number: PCT/NL2017/050622
(87) International publication number: WO 2018/056809

(56) References cited:
- EP-A2- 1 047 166
- WO-A1-2006/101338
- US-A1- 2007 252 919
- US-A1- 2008 158 446
- US-A1- 2015 168 207

## Description

The present invention relates to a display screen device, in particular an interactive display screen device, comprising a frame with a foot unit with wheel elements, and a display screen unit connected to the frame with display screen reproduction means, wherein the display screen unit is movable in relation to the frame between a first, low position and a second, high position.

A display screen device of this type is known, for example in the form of an interactive whiteboard. The known display screen device is mobile, since it is provided with a movable frame. The known display screen device is furthermore height-adjustable, so that the display screen unit can be positioned at a height that is ergonomic for the user. The display screen device is used, for example, by teachers to support their lessons, although other applications, for example in business, are of course conceivable. US 2015/0168207 A1 discloses a surgical object and comprehensive fluid monitoring system.

The object of the present invention is to improve the currently known interactive display screen device, and, in particular, to improve the safety of the display screen device.

To do this, the invention provides a display screen device according to Claim 1. The display screen device according to the present invention comprises a frame with a foot unit and a multiplicity of wheel elements connected thereto, with which the display screen device is movable in a rolling manner. The display screen device is movable by means of the wheel elements, for example between different rooms. If the display screen device is used in a school environment, the display screen device can be moved between different classrooms.

The display screen device according to the present invention furthermore comprises a display screen unit connected to the frame with display screen reproduction means, wherein the display screen unit is height-adjustable in relation to the foot unit between a first, low position and a second, high position.

According to the present invention, the display screen device is provided with braking means for braking one or more of the multiplicity of wheel elements, wherein the braking means are configured so that the one or more of the multiplicity of wheel elements is released only if the display screen unit is near or in the first, low position, so that the display screen device is movable only if the display screen unit is near or in the first, low position.

In order to improve safety and stability, the display screen device thus comprises braking means for braking one or more of the multiplicity of wheel elements. The display screen device is thereby prevented from being moved. The braking means are configured so that the one or more of the multiplicity of wheel elements is released only if the display screen unit is near or in the first position. It can thus be ensured herewith that the display screen device is movable only if the display screen unit is near or in the first, low position. Movement in a higher position is then prevented as the braking means are activated. In the low position, the display screen device is relatively stable, whereby the risk of unwanted falling of the display screen device is lower. In the relatively unstable higher position of the display screen unit (higher centre of gravity), movement is then prevented. The safety of the display screen device is thus improved, and the object of the present invention is achieved.

Advantageous embodiments are explained below.

In one embodiment, the braking means comprise a movable braking element that is configured to grip onto one or more of the multiplicity of wheel elements. A simple but effective blocking of the movement of the display screen device can be implemented in this way.

In one embodiment, the braking means comprise a first actuator which is movably connected to the frame or to the display screen unit, and which is configured to release blocked wheel elements when the display screen unit is moved to the first, lower position. In particular, this first actuator can be configured in an effective manner to move along with the display screen unit when the latter is height-adjusted, and thus release the braking elements therewith when the display screen unit reaches the first, low position.

In one embodiment, the braking means comprise a second actuator connected to the foot unit, said second actuator being configured to interact with the first actuator to release the blocked wheel elements when the display screen unit is moved to the first, lower position. Use of the second actuator enables a release of the wheel elements in an effective and simple manner.

It is conceivable for the second actuator to be operatively connected to the braking element, and, when the display screen unit is moved near to the first, low position, for the first actuator to be configured to pivot the second actuator in order to move the braking element away from the wheel element.

The display screen device may furthermore comprise drive means which are configured to move the display screen unit between the first position and the second position, in particular by means of a mechanical, electrical, hydraulic or pneumatic drive source. The display screen device comprises a control unit which is configured to control the drive means, so that the drive means can be put into operation or just switched off.

The display screen device may furthermore comprise position-setting means which are connected to the control unit and which are operable by a user, wherein the control unit is configured to control the drive means following the operation of the position-setting means in such a way that the display screen unit is moved to a predetermined setting position.

The predetermined setting position could comprise the first, low position, so that the display screen device can be set automatically to a movable state. Furthermore, the predetermined setting position could also be a height of the display screen unit which corresponds to a blocked position. In other words, the display screen unit is then moved from the first, low position to a slightly higher position, and to such a height that the braking means are activated and the wheel elements are braked, in particular blocked.

In particular, however, the predetermined setting position may be a setting position adjusted to the height of the user. The adjusted setting position may then be the same as the first position or the second position. In general, however, the setting position adjusted to the height of the user will be located between the first position and the second position, as a result of which it is thus not the same as the first position or the second position. By using the position-setting means, the display screen device can be moved relatively simply and quickly to the required setting position without the user having to invest a lot of time and effort in moving the display screen device to the desired position. The display screen unit can thus be set relatively simply and quickly to a predetermined and ergonomic setting position desired by the user.

It is preferable, in particular, if the position-setting means are configured so that the display screen unit is movable to a multiplicity of predetermined setting positions. The multiplicity of predetermined setting positions may be different positions for one user or, for a multiplicity of users, a single position for each user or, for a multiplicity of users, different positions for each user.

The position-setting means according to the present invention may be designed in different ways.

In a first embodiment, the position-setting means comprise a multiplicity of button elements provided on the display screen device. A predetermined setting position can simply be chosen by means of the button elements. It is conceivable for one of the button elements to be allocated to a first user, a following button element to be allocated to a third user, and so on until all button elements and/or users are linked to one another.

In this embodiment, it is conceivable, for example, for the display screen device to comprise foot-operating means connected to the frame which are operable by a user. By means of a press of the button, the display screen device can then be moved to a desired setting position. It is alternatively or additionally conceivable for the foot-operating means to be configured so that the display screen unit is thereby movably adjustable by a user between the first position and the second position.

These foot-operating means are also applicable per se to height-adjustable display screen devices in general. According to one aspect of the invention, this therefore provides a display screen device, according to claim 1, further comprising:
- a frame;
- a display screen unit connected to the frame with display screen reproduction elements, wherein the display screen unit is movable in relation to the frame between a first position and a second position;
- drive means which are configured to move the display screen unit between the first position and the second position;
- a control unit which is configured to control the drive means;
- foot-operating means connected to the frame which are operable by a user, and with which the display screen device is movably adjustable by a user between the first position and the second position.

According to this aspect, the height of the display screen unit can thus be set as required with the foot. In particular, a "high" button and a "low" button can be provided.

In a second embodiment, the position-setting means are operable by means of wireless communication, such as, for example, RFID, NFC, and/or Bluetooth. The user can then, for example, use a personal card into which an RFID chip is incorporated. The RFID comprises instructions which correspond to the predetermined setting position, and/or comprise data of the user concerned. In this case, the device comprises an RFID reader which is able to read the instructions and/or the data, after which the display screen unit can be moved directly, or following intervention on the part of the user, to a desired setting position. A corresponding method is possible by means of NFC and/or a Bluetooth connection, for example with a Smartphone with an associated app.

In a third embodiment, the display screen reproduction means are configured to display a graphical user interface. A graphical user interface (or GUI) is known per se and uses graphical images, widgets and/or text which are shown on the display screen reproduction means and which are operable by the user. In this third embodiment, the graphical user interface comprises the position-setting means. In other words, the user can operate the graphical user interface, and one of the components of the graphical user interface is an operating element (for example a menu, a submenu, a program, and/or a button) with which the user can give an instruction, as a result of which the display screen device moves to the associated predetermined setting position.

It should be noted that the graphical user interface may be operable in a manner known per se, such as, for example, by means of, for example, keys, a (standard) keyboard, mouse, touchpad, trackpad and/or voice control. In one specific embodiment, the graphical user interface is at least operable by means of a touchscreen. The position-setting means can thus be operated in a simple manner herewith.

The wireless communication according to the second embodiment may be used in combination with a graphical user interface according to the third embodiment. It is then possible, for example, for the specific user to be identified through the use of the wireless communication, after which a selection menu is activated on the graphical user interface, wherein one or more predetermined setting positions of the user concerned can be chosen. By swiping a card with an RFID chip along a reading element provided on the display screen device, the user can indicate that he wishes to change the position of the display screen unit, after which the required position can be chosen by means of the graphical user interface.

For all three embodiments of the position-setting means described above, it is advantageous, in particular, if the predetermined setting position is settable by a user. The user can thus, for example, set a desired height and choose this height as the predetermined setting position applicable to him.

The invention will be explained in detail below with reference to some embodiments shown in the figures. In the figures:
Fig. 1a and 1b show schematic views of a display screen device according to a first embodiment, in a first (1a) and a second (1b) position;
Fig. 2a and 2b show schematic views of a display screen device according to a second embodiment, in a first (2a) and a second (2b) position;
Fig. 3a and 3b show schematic views of a display screen device according to a third embodiment which is moved from an initial position (3a) by means of the position-setting means to the desired setting position (3b);
Fig. 4a and 4b show schematic views of the operation of the braking means in an activated state (4a) and in a releasing (4b) state;
Fig. 5a and 5b show schematic views of a further embodiment of the display screen device, in a first (5a) and a second (5b) position;
Fig. 6 shows a schematic representation of the frame provided with foot-operating means.

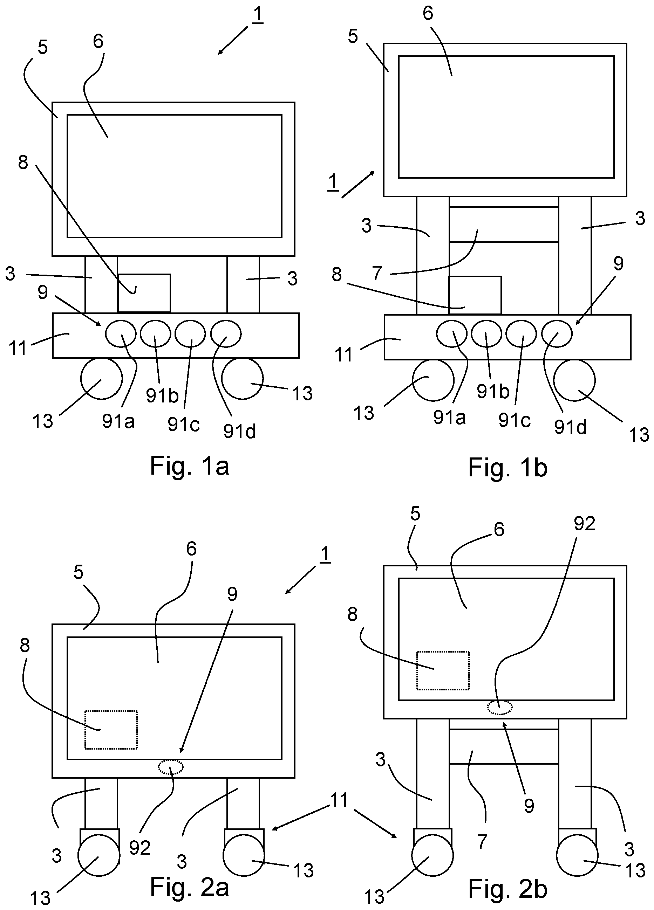

Fig. 1 shows schematic views of a display screen device 1 with a frame 3 and a display screen unit 5 connected thereto. The display screen unit 5 comprises display screen reproduction means 6 for showing images, such as video images and/or computer images. The display screen unit 5 is movably attached to the frame 3. Fig. 1a shows a first, bottom, low position of the display screen unit 5, and Fig. 1b shows a second, top, high position of the display screen unit 5. The display screen unit 5 is movable in relation to the frame 3 between a first position and a second position. As shown in Fig. 1b, the display screen device 1 comprises drive means 7 which are configured to move the display screen unit 5 between the first position and the second position. The device 1 furthermore comprises a control unit 8 which is configured to control the drive means 7. The drive means may comprise, in particular, a motor, such as an electric motor. The display screen unit 5 may be vertically movable in a manner known per se, for example in that the frame comprises telescopic guides, or in that the display screen unit 5 is movable via a rail guide provided on the frame 3. This is known per se to the person skilled in the art, and alternatives thereto are obviously conceivable.

The display screen device 1 furthermore comprises a foot unit 11 connected to the frame, to which a multiplicity of wheel elements 13 are attached, in such a way that the display screen device 1 is movable in a rolling manner. In particular, four wheel elements 13 are provided, on each corner of the foot unit 11 in order to provide a stable device 1.

Position-setting means 9 which are designed in the embodiment shown here in the form of in total four buttons 91a, 91b, 91c, 91d are furthermore also provided on the foot unit 11. These position-setting means 9 are connected to the control unit 8 and are operable by a user, for example by means of the foot. The control unit 8 is configured, following operation of the position-setting means 9, to control the drive means in such a way that the display screen unit is moved to a predetermined setting position. The setting position may, for example, be a height setting adjusted to the height of the user. Through the use of four different buttons, four different predetermined setting positions, for example, are stored which can be retrieved thereafter by different users. Each button 91a-d can thus belong to an individual user.

As will be explained later, the display screen device 1 according to the present invention comprises braking means 15 (not shown in Fig. 1a and 1b) for braking one or more of the multiplicity of wheel elements 13, wherein these braking means are configured so that the one or more of the multiplicity of wheel elements 13 is released only if the display screen unit 5 is near or in the first low position (see Fig. 1a), so that the display screen device is movable only if the display screen unit is near or in the first, low position. The braking means may be configured in such a way that a predetermined and defined transitional position exists wherein the wheel elements 13 are released from the first position to the transitional position, and the wheel elements are blocked from the transitional position to the second, high position.

Fig. 2 shows a different embodiment of the display screen device 1. The embodiment shown here again comprises a frame 3 with a display screen unit 5 movable in relation thereto. This display screen device 1 is similarly provided with a movable foot unit 11 (as in Fig. 1) which is provided here on leg ends formed by the frame 3. The display screen unit 5 of the display screen device 1 is movable between the position (first, bottom position) shown in Fig. 2a and the position (second, top position) shown in Fig. 2b. The wheel elements 13 are blocked in the second, top position, whereas the wheel elements 13 are released in the first, bottom position so that the display screen device 1 is movable. The display screen unit 5 comprises display screen reproduction means 6 which are configured, in particular, to reproduce photo, video and/or computer images. Other images are obviously conceivable. The display screen unit 5 comprises a control unit 8. Here also, the device 1 again comprises drive means 7, such as those already described with reference to Fig. 1a and 1b. In this embodiment, the display screen unit 5 is provided with the position-setting means 9, in the form of an activation element 92 which is configured for wireless communication. In particular, this may be an RFID reader which interacts with an RFID card which can be shown by a user. It is also conceivable for a different wireless technology, such as NFC or Bluetooth, to be used. In any event, a wireless communication technology that interacts with a personal user object, such as, for example, a badge, a card and/or a mobile telephone/Smartphone, is advantageous. The individual user is identifiable with the personal user object. The position-setting means 9 are connected to the control unit 8, whereby, following activation of the activation element 92, the drive means 7 are driven to move the display screen unit 5 to the desired setting position, associated with the user object that is used.

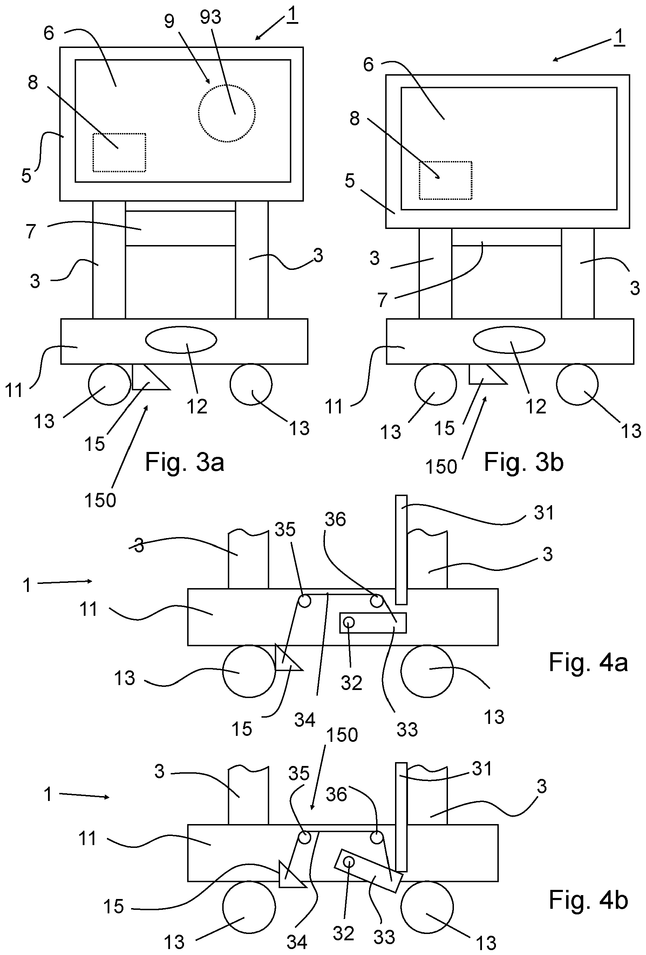

Fig. 3a shows a third embodiment of the display screen device 1 according to the present invention. The display screen device 1 comprises a frame 3 with a display screen unit 5, and also a foot unit 11 movably connected to the frame 3 and having wheel elements 13. The display screen unit 5 comprises display screen reproduction means 6 which are configured to reproduce a graphical user interface 93. This graphical user interface 93 comprises the position-setting means 9 with which the display screen unit 5 can be moved by means of the drive means 7 and the control unit to a desired setting position. On the basis of the situation shown in Fig. 3a, this operates as follows. The user activates the graphical user interface 93, for example by touching the display screen 6. The display screen reproduction means 6 comprise a touch-sensitive screen (touchscreen) which is configured, following touching thereof, or following a specific touch, to reproduce a menu for, inter alia, the height setting of the display screen unit 5. The user then presses the desired button, after which the display screen unit 5 moves to the desired position (see Fig. 3b). The setting of the display screen unit 5 to the desired height thus becomes very simple for the user.

Fig. 3a and 3b furthermore show that the foot unit is provided with braking means 150. The braking means are configured to release the wheel elements only if the display screen unit is in the first, low position. The braking means 150 may comprise a braking element 15, for example in the form of a block which grips onto one or more wheel elements 13 so that movement of the device 1 following the activation of the braking means 150 is prevented.

Fig. 4a and 4b show an embodiment of the braking means 150. Fig. 4a shows the braking means 150 in an activated state, and Fig. 4b shows the braking means 150 in a release state. In this embodiment, the braking means comprise a first rod-shaped actuator 31 which is movably connected to the frame 3 or to the display screen unit 5. The actuator 31 is movable essentially in a vertical direction. The braking means furthermore comprises a second actuator 33 which is pivotably attached around the axis 32 to the foot unit 11. A wire element 34 is suspended between the second actuator 33 and the brake 15 by means of pulley elements 35, 36. The wire element 34, the second actuator 33 and the pulleys 35, 36 are positioned in such a way that pivoting of the second actuator 33 results in a movement of the brake 15 toward the wheel element 13, or away from the wheel element 13. The pivoting of the second actuator 33 is initiated by the first actuator 31, wherein a downward movement of the first actuator 31 ensures that the brake 15 is moved toward a release state, and an upward movement ensures that the brake 15 is moved toward an activated state. The first actuator 31 is configured, in particular, to move downward in response to a downward movement of the display screen unit 5. The second actuator 33 is preferably operated by the first actuator 31 only if the display screen unit 5 is close to the first, bottom position, or if it just reaches the first, bottom position. Pressing means (not shown, but, for example, in the form of a spring) can be provided to push the second actuator 33 back to the position shown in Fig. 4a so that, when the first actuator 31 moves upward, the braking means 150 are again activated. The braking can be performed by means of a pressure contact, as shown in Fig. 3a and 4a, or in any other way, for example by means of a mechanical brake, electrical brake or magnetic brake. In particular, a drum brake, disc brake or blocking element with interlocking gear teeth can be used. Other types of brakes are obviously conceivable. The great advantage of this embodiment is that it improves stability and safety, given that the device can be moved only if the centre of gravity is positioned relatively low. Unwanted falling of the device is thereby prevented.

Different embodiments of the present invention have been explained above. It should be clear that various components of the different devices are combinable. The different embodiments of the foot unit 11 can be chosen separately from the different embodiments of the position-setting means 9. For the foot unit 11, there is a choice between:
1) foot element which connects struts of the frame (Fig. 1, 3, 4, 5);
2) foot element for each strut (Fig. 2);
For the position-setting means 9, a choice can be made between:
a) mechanical buttons on the device, for example on the frame 3, the display screen unit 5, and/or (if present), the foot unit 11;
b) wireless communication by means of, for example, RFID, NFC and/or Bluetooth;
c) operation by means of the graphical user interface (with or without touchscreen).
In principle, any combination from the lists set out above is conceivable, and forms part of the invention described here.

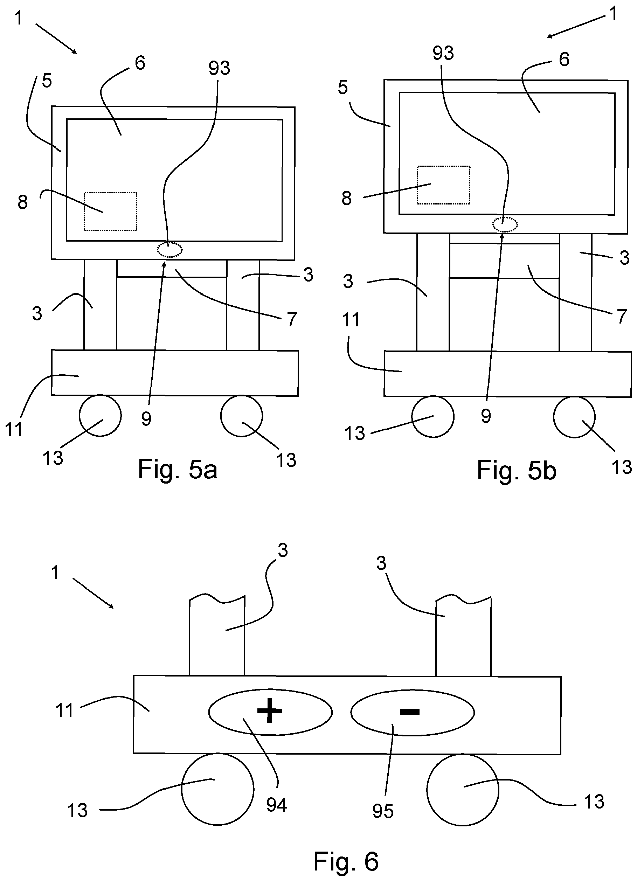

Fig. 5a thus shows, as an example, a combination of a device 1 with a foot unit with wheel elements, with braking means, wherein the foot unit connects the struts 3 (choice 1); wherein the position-setting means 9 are designed as wireless communication with an activation element 93 (choice b). It should furthermore be noted that, in the second list (choices a, b, c), a plurality of choices can, in principle, be made simultaneously. Physical buttons and/or an operation by means of a graphical user interface can thus be provided along with the wireless communication. The person skilled in the art will be able to make a suitable choice.

Finally, Fig. 6 shows a further embodiment of a foot unit 11 for the device 1 according to the present invention, wherein, in particular, foot buttons 94, 95 are provided. The foot buttons 94, 95 are connected to the drive means and, if required, to the control unit. With the foot buttons 94, 95, the display screen unit 5 can be positioned incrementally higher ("+", foot button 94), or incrementally lower ("-", foot button 95). An individual fine adjustment between the first position and the second position is thus possible for the user.

## Claims

1. Display screen device (1), comprising:
- a frame (3) with a foot unit (11) and a multiplicity of wheel elements (13) connected thereto, wherein the display screen device (1) is movable in a rolling manner;
- a display screen unit (5) connected to the frame with display screen reproduction means (6), wherein the display screen unit (5) is height-adjustable in relation to the foot unit (11) between a first, low position and a second, high position;
**characterized in that** said display screen device (1) further comprises braking means (150) for braking one or more of the multiplicity of wheel elements (13), wherein the braking means (150) are configured so that the one or more of the multiplicity of wheel elements (13) is released only if the display screen unit (5) is near or in the first, low position so that the display screen device is movable only if the display screen unit is near or in the first, low position.

2. Display screen device according to Claim 1, wherein the braking means (150) comprise a movable braking element (15) which is configured to grip onto the one or more of the multiplicity of wheel elements (13).

3. Display screen device according to Claim 1 or 2, wherein the braking means (150) comprise a first actuator (31) which is movably connected to the frame (3) or to the display screen unit (5), and which is configured to release blocked wheel elements (13) when the display screen unit (5) is moved to the first, lower position.

4. Display screen device according to Claim 3, wherein the braking means (150) comprise a second actuator (33) connected to the foot unit, which is configured to interact with the first actuator (31) to release the blocked wheel elements (13) when the display screen unit (5) is moved to the first, lower position.

5. Display screen device according to Claims 2, 3 and 4, wherein the second actuator (33) is operatively connected to the braking element (15), and wherein, when the display screen unit (5) is moved near to the first, low position, the first actuator (31) is configured to pivot the second actuator (33) in order to move the braking element (15) away from the wheel element.

6. Display screen device (1) according to one of the preceding claims, comprising:
- drive means (7) which are configured to move the display screen unit (5) between the first position and the second position;
- a control unit (8) which is configured to control the drive means; and
- position-setting means (9) which are connected to the control unit (8) and which are operable by a user, wherein the control unit (8) is configured to control the drive means following the operation of the position-setting means (9) in such a way that the display screen unit is moved to a predetermined setting position.

7. Display screen device according to Claim 6, wherein the predetermined setting position is the first, low position.

8. Display screen device according to Claim 6 or 7, wherein the display screen reproduction means (6) are configured to display a graphical user interface (93), and wherein the graphical user interface (93) comprises the position-setting means (9).

9. Display screen device according to Claim 6, 7 or 8, wherein the position-setting means (9) are configured so that the display screen unit is movable to a multiplicity of predetermined setting positions.

10. Display screen device according to Claims 6-9, wherein the position-setting means (9) are operable by means of wireless communication (92), such as, for example, NFC, RFID and/or Bluetooth.

11. Display screen device according to Claims 6-10, wherein the predetermined setting position is settable by a user.

12. Display screen device according to one of the preceding claims, comprising foot-operating means (94, 95) connected to the foot unit (11) and operable by a user, and wherein the display screen unit (5) is movably adjustable by a user between the first position and the second position.

## Patentansprüche

1. Anzeigebildschirmvorrichtung (1), umfassend:
- einen Rahmen (3) mit einer Fußeinheit (11) und mehreren damit verbundenen Radelementen (13), wobei die Anzeigebildschirmvorrichtung (1) auf rollende Weise beweglich ist;
- eine mit dem Rahmen verbundene Anzeigebildschirmeinheit (5) mit Anzeigebildschirm-Wiedergabemitteln (6), wobei die Anzeigebildschirmeinheit (5) in Bezug auf die Fußeinheit (11) zwischen einer ersten unteren Position und einer zweiten oberen Position höhenverstellbar ist;
**dadurch gekennzeichnet, dass** die Anzeigebildschirmvorrichtung (1) ferner Bremsmittel (150) zum Bremsen eines oder mehrerer der mehreren Radelemente (13) umfasst, wobei die Bremsmittel (150) so ausgelegt sind, dass das eine oder mehreren der mehreren Radelemente (13) nur freigegeben wird/werden, wenn sich die Anzeigebildschirmeinheit (5) an der ersten unteren Position oder in deren Nähe befindet, so dass die Anzeigebildschirmvorrichtung nur beweglich ist, wenn sich die Anzeigebildschirmeinheit an der ersten unteren Position oder in deren Nähe befindet.

2. Anzeigebildschirmvorrichtung nach Anspruch 1, wobei die Bremsmittel (150) ein bewegliches Bremselement (15) umfassen, das zum Halten eines oder mehrerer der mehreren Radelemente (13) ausgelegt ist.

3. Anzeigebildschirmvorrichtung nach Anspruch 1 oder 2, wobei die Bremsmittel (150) einen ersten Stellantrieb (31) umfassen, der beweglich mit dem Rahmen (3) oder mit der Anzeigebildschirmeinheit (5) verbunden ist und der dafür ausgelegt ist, blockierte Radelemente (13) freizugeben, wenn die Anzeigebildschirmeinheit (5) an die erste untere Position bewegt wird.

4. Anzeigebildschirmvorrichtung nach Anspruch 3, wobei die Bremsmittel (150) einen zweiten Stellantrieb (33) umfassen, der mit der Fußeinheit verbunden ist und der zur Interaktion mit dem ersten Stellantrieb (31) ausgelegt ist, um die blockierten Radelemente (13) freizugeben, wenn die Anzeigebildschirmeinheit (5) an die erste untere Position bewegt wird.

5. Anzeigebildschirmvorrichtung nach Anspruch 2, 3 und 4, wobei der zweite Stellantrieb (33) funktionsfähig mit dem Bremselement (15) verbunden ist, und wobei, wenn die Anzeigebildschirmeinheit (5) in die Nähe der ersten unteren Position bewegt wird, der erste Stellantrieb (31) zum Schwenken des zweiten Stellantriebs (33) ausgelegt ist, um das Bremselement (15) von dem Radelement weg zu bewegen.

6. Anzeigebildschirmvorrichtung (1) nach einem der vorhergehenden Ansprüche, umfassend:
- Antriebsmittel (7), die zum Bewegen der Anzeigebildschirmeinheit (5) zwischen der ersten Position und der zweiten Position ausgelegt sind;
- eine Steuereinheit (8), die zum Steuern der Antriebsmittel ausgelegt ist; und
- Positionseinstellmittel (9), die mit der Steuereinheit (8) verbunden und von einem Benutzer bedienbar sind, wobei die Steuereinheit (8) so ausgelegt ist, dass sie die Antriebsmittel nach der Bedienung der Positionseinstellmittel (9) auf solche Weise steuert, dass die Anzeigebildschirmeinheit an eine vorbestimmte Einstellposition bewegt wird.

7. Anzeigebildschirmvorrichtung nach Anspruch 6, wobei die vorbestimmte Einstellposition die erste untere Position ist.

8. Anzeigebildschirmvorrichtung nach Anspruch 6 oder 7, wobei die Anzeigebildschirm-Wiedergabemittel (6) zum Anzeigen einer grafischen Benutzeroberfläche (93) ausgelegt sind und wobei die grafische Benutzeroberfläche (93) die Positionseinstellmittel (9) umfasst.

9. Anzeigebildschirmvorrichtung nach Anspruch 6, 7 oder 8, wobei die Positionseinstellmittel (9) so ausgelegt sind, dass die Anzeigebildschirmeinheit an mehrere vorbestimmte Einstellpositionen beweglich ist.

10. Anzeigebildschirmvorrichtung nach Anspruch 6 bis 9, wobei die Positionseinstellmittel (9) mithilfe drahtloser Kommunikation (92), wie beispielsweise mit NFC, RFID und/oder Bluetooth, bedienbar sind.

11. Anzeigebildschirmvorrichtung nach Anspruch 6 bis 10, wobei die vorbestimmte Einstellposition durch einen Benutzer einstellbar ist.

12. Anzeigebildschirmvorrichtung nach einem der vorhergehenden Ansprüche, Fußbedienmittel (94, 95) umfassend, die mit der Fußeinheit (11) verbunden und durch einen Benutzer bedienbar sind, und wobei die Anzeigebildschirmeinheit (5) durch einen Benutzer zwischen der ersten Position und der zweiten Position beweglich einstellbar ist.

## Revendications

1. Dispositif d'écran d'affichage (1), comprenant :
- un cadre (3) avec une unité de pied (11) et une pluralité d'éléments de roue (13) reliés à celle-ci, où le dispositif d'écran d'affichage (1) est mobile de manière roulante ;
- une unité d'écran d'affichage (5) reliée au cadre avec des moyens de reproduction d'écran d'affichage (6), où l'unité d'écran d'affichage (5) est ajustable en hauteur par rapport à l'unité de pied (11) entre une première position basse et une deuxième position haute ;
**caractérisé en ce que** ledit dispositif d'écran d'affichage (1) comprend en outre des moyens de freinage (150) pour freiner un ou plusieurs élément(s) de roue de la pluralité d'éléments de roue (13), où les moyens de freinage (150) sont configurés de sorte que le ou les plusieurs élément(s) de roue de la pluralité d'éléments de roue (13) ne soit/soient libéré(s) que si l'unité d'écran d'affichage (5) est proche de la première position basse ou dans celle-ci de sorte que le dispositif d'écran d'affichage soit mobile uniquement si l'unité d'écran d'affichage est proche de la première position basse ou dans celle-ci.

2. Dispositif d'écran d'affichage selon la revendication 1, dans lequel les moyens de freinage (150) comprennent un élément de freinage mobile (15) qui est configuré pour s'accrocher sur le ou les plusieurs élément(s) de roue de la pluralité d'éléments de roue (13).

3. Dispositif d'écran d'affichage selon la revendication 1 ou 2, dans lequel les moyens de freinage (150) comprennent un premier actionneur (31) qui est relié de façon mobile au cadre (3) ou à l'unité d'écran d'affichage (5), et qui est configuré pour libérer des éléments de roue bloqués (13) lorsque l'unité d'écran d'affichage (5) est déplacée vers la première position basse.

4. Dispositif d'écran d'affichage selon la revendication 3, dans lequel les moyens de freinage (150) comprennent un deuxième actionneur (33) relié à l'unité de pied, qui est configuré pour interagir avec le premier actionneur (31) pour libérer les éléments de roue bloqués (13) lorsque l'unité d'écran d'affichage (5) est déplacée vers la première position basse.

5. Dispositif d'écran d'affichage selon les revendications 2, 3 et 4, dans lequel le deuxième actionneur (33) est relié fonctionnellement à l'élément de freinage (15), et dans lequel, lorsque l'unité d'écran d'affichage (5) est déplacée à proximité de la première position basse, le premier actionneur (31) est configuré pour faire pivoter le deuxième actionneur (33) afin de déplacer l'élément de freinage (15) à l'opposé de l'élément de roue.

6. Dispositif d'écran d'affichage (1) selon l'une des revendications précédentes, comprenant :
- des moyens d'entraînement (7) qui sont configurés pour déplacer l'unité d'écran d'affichage (5) entre la première position et la deuxième position ;
- une unité de commande (8) qui est configurée pour commander les moyens d'entraînement ; et
- des moyens de réglage de position (9) qui sont reliés à l'unité de commande (8) et qui sont actionnables par un utilisateur, où l'unité de commande (8) est configurée pour commander les moyens d'entraînement suite à l'actionnement des moyens de réglage de position (9) de sorte que l'unité d'écran d'affichage soit déplacée vers une position de réglage prédéterminée.

7. Dispositif d'écran d'affichage selon la revendication 6, dans lequel la position de réglage prédéterminée est la première position basse.

8. Dispositif d'écran d'affichage selon la revendication 6 ou 7, dans lequel les moyens de reproduction d'écran d'affichage (6) sont configurés pour afficher une interface utilisateur graphique (93), et dans lequel l'interface utilisateur graphique (93) comprend les moyens de réglage de position (9).

9. Dispositif d'écran d'affichage selon la revendication 6, 7 ou 8, dans lequel les moyens de réglage de position (9) sont configurés de sorte que l'unité d'écran d'affichage soit mobile vers une pluralité de positions de réglage prédéterminées.

10. Dispositif d'écran d'affichage selon les revendications 6 à 9, dans lequel les moyens de réglage de position (9) sont actionnables au moyen d'une communication sans fil (92), telle que, par exemple, NFC, RFID et/ou Bluetooth.

11. Dispositif d'écran d'affichage selon les revendications 6 à 10, dans lequel la position de réglage prédéterminée peut être réglée par un utilisateur.

12. Dispositif d'écran d'affichage selon l'une des revendications précédentes, comprenant des moyens d'actionnement de pied (94, 95) reliés à l'unité de pied (11) et actionnables par un utilisateur, et dans lequel l'unité d'écran d'affichage (5) peut être ajustée de façon mobile par un utilisateur entre la première position et la deuxième position.
